# EUROPÄISCHE PATENTSCHRIFT

(11) **EP 3 154 808 B1**
(45) Veröffentlichungstag und Bekanntmachung des Hinweises auf die Patenterteilung: **10.11.2021**
(21) Anmeldenummer: 15726573.7
(22) Anmeldetag: 28.05.2015
(51) Int. Cl.: B60K 15/03

(54) **TANKANORDNUNG, VORZUGSWEISE FÜR EIN KRAFTFAHRZEUG**
TANK ARRANGEMENT, PREFERABLY FOR A MOTOR VEHICLE
AGENCEMENT DE RÉSERVOIR, DE PRÉFÉRENCE POUR UN VÉHICULE AUTOMOBILE

(30) Priorität: 16.06.2014 DE 102014211500; 21.11.2014 DE 102014223842
(43) Veröffentlichungstag der Anmeldung: 19.04.2017
(73) Patentinhaber: Bayerische Motoren Werke Aktiengesellschaft, 80809 München (DE)
(72) Erfinder: FARKAS, Attila, 80937 München (DE); DRÖGE, Steffen, 86152 Augsburg (DE); LIEBHART, Wolfgang, 80636 Muenchen (DE)
(86) Internationale Anmeldenummer: PCT/EP2015/061769
(87) Internationale Veröffentlichungsnummer: WO 2015/193073

(56) Entgegenhaltungen:
- EP-A2- 1 209 018
- EP-A2- 1 591 294
- WO-A1-02/46598
- WO-A1-2007/031455
- DE-A1- 2 550 950
- DE-A1- 4 240 629
- DE-A1- 10 201 652
- US-A1- 2004 021 271

## Beschreibung

Die vorliegende Erfindung betrifft eine Tankanordnung, die vorzugsweise in einem Kraftfahrzeug eingesetzt wird. Die Tankanordnung kann zum Speichern unterschiedlicher Betriebsstoffe, beispielsweise Kraftstoff oder Harnstoff verwendet werden.

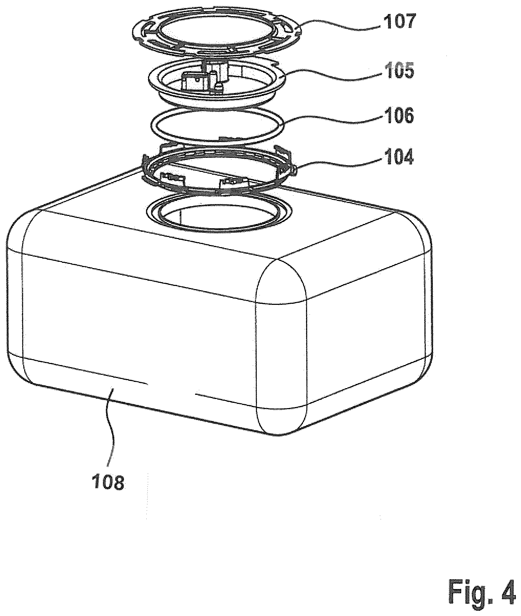

Figur 4 zeigt exemplarisch in Explosionsdarstellung den herkömmlichen Verschluss einer Tankanordnung. Demgemäß ist in dem Tank 102 nach dem Stand der Technik ein Befestigungselement 104 nach dem Stand der Technik eingesetzt. Das Befestigungselement 104 ist dabei fest mit dem Tank 102 verbunden. Auf das Befestigungselement 104 wird ein üblicher Dichtring 106 aufgesetzt. Bei einem Tank 102 aus Kunststoff würde die die Dichtung auf der Tankblase sitzen. Daraufhin erfolgt ein Einsetzen eines Flansches 105 nach dem Stand der Technik. Die Befestigung des Flansches 105 erfolgt über ein Verschlusselement 107 nach dem Stand der Technik. Das Verschlusselement 107, auch Camlock-Ring genannt, ist als separater Ring ausgebildet und wird auf den Flansch 105 aufgesetzt. Es ist Aufgabe vorliegender Erfindung eine Tankanordnung, insbesondere für ein Kraftfahrzeug anzugeben, die bei kostengünstiger Herstellung einfach zu montieren ist und gleichzeitig leichtbauend ist und einen sicheren Verschluss mit entsprechenden Anschlussmöglichkeiten an einer Tanköffnung ermöglicht. Die gattungsgemäßen Druckschriften DE42 40 629 A1, WO 02/46598 A1, DE 25 50 950 A1, DE 102 01 652 A1 zeigen Stand der Technik.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch eine Tankanordnung, vorzugsweise für ein Kraftfahrzeug, umfassend einen Tank mit zumindest einer Öffnung. In dem Tank ist ein Medium, beispielsweise Kraftstoff oder ein anderer Betriebsstoff wie Harnstoff aufnehmbar. Die Tankanordnung umfasst des Weiteren ein fest mit dem Tank verbundenes Befestigungselement an der Öffnung. Das Befestigungselement ist insbesondere stoff- und/oder formschlüssig mit dem Tank verbunden. In die Öffnung ist ein Flansch eingesetzt, der die Öffnung gegebenenfalls zusammen mit einer Dichtung verschließt, insbesondere dichtend und reversibel lösbar. In dem Flansch ist zumindest eine Anschlussöffnung ausgebildet, oder der Flansch ist als Blindflansch ausgebildet und verschließt die Öffnung. Der Blindflansch hat lediglich eine "Deckelfunktion". Solche Blindflansche verschließen die Öffnung, die nur für die Montage nötig ist. Diese Anschlussöffnung dient zum Anschließen des Tanks an das Kraftfahrzeug, insbesondere dichtend und reversibel lösbar. Beispielsweise führt über die Anschlussöffnung eine Kraftstoffleitung zu einem Motor. Ferner kann über solche eine Anschlussöffnung ein Kabel in den Tank geführt werden. Dieses Kabel führt beispielsweise zu einer Pumpe im Tank. Mit anderen Worten kann ein Anschluss für eine Vorlaufleitung bzw. eine Entlüftungsleitung (Medienleitungen), und/oder elektrische Anschlüsse (z.B. Strom für die Pumpe) vorgesehen sein. Die relativ große Öffnung im Tank ist notwendig, um zum Beispiel den Tank zu fertigen oder um weitere Elemente wie Pumpen in den Tank einzusetzen. Solche Tanköffnungen können beispielsweise einen Durchmesser von ca. 90 mm, von ca. 95 mm, von ca. 115 mm oder von ca. 130 mm aufweisen. Der Flansch verschließt die relativ große Öffnung und stellt gleichzeitig im Vergleich zur Tanköffnung kleinere bzw. relativ kleine Anschlussöffnungen zur Verfügung. Erfindungsgemäß umfasst der Flansch einen Verschlussbereich. Der Verschlussbereich ist am Flansch ausgebildet. Beim Einsetzen des Flansches in die Öffnung kann der Verschlussbereich kraft- und/oder formschlüssig mit dem Befestigungselement verbunden werden. Der Verschluss der erfindungsgemäßen Tankanordnung umfasst im Wesentlichen zwei Elemente, nämlich das Befestigungselement und den Flansch. Vorteilhafterweise kann zwischen Flansch bzw. Verschlussbereich und Befestigungselement ein Dichtungsring eingesetzt werden. Allerdings kann bei entsprechender Ausbildung des Befestigungselementes und/oder des Flansches auch auf den Dichtungsring verzichtet werden.

Die erfindungsgemäße Verwendung eines Flansches mit integriertem Verschlussbereich bzw. integrierten Camlock-Ring, anstatt eines separaten Verschlusselementes, spart erhebliche Kosten in der Logistik und bei der Montage, da weniger Einzelheiten bereitgehalten und montiert werden müssen. Entsprechend verkürzt sich auch die Zykluszeit in der Montage. Auch die Reparatur oder die Wartung, beispielsweise beim Auswechseln einer Pumpe in dem Tank, vereinfacht sich dadurch.

Bevorzugt ist vorgesehen, dass der Flansch samt dem Verschlussbereich und der zumindest einen Anschlussöffnung einstückig gefertigt ist. Es werden also keine Einzelteile zusammengesetzt, um den erfindungsgemäßen Flansch zu bilden. Vielmehr ist der gesamte Flansch ein einstückiges Bauteil.

Vorteilhafterweise wird der Flansch vollständig aus Kunststoff gefertigt. Insbesondere ist der Flansch ein Spritzguss-Kunststoff-Bauteil. Als Kunststoff wird vorteilhafterweise Polyoxymethylen (POM) verwendet. Im Rahmen der Erfindung wurde erkannt, dass der Flansch mit dem integrierten Verschlussbereich stabil genug aus Kunststoff gefertigt werden kann. Im Stand der Technik war das Verschlusselement üblicherweise aus Metall gefertigt. Die bevorzugte Kunststofffertigung ermöglicht somit eine erhebliche Gewichtsersparnis. Alternativ dazu ist es jedoch durchaus möglich, den gesamten Flansch aus Metall zu fertigen oder den Flansch in einem Mehrkomponenten-Spritzgussverfahren herzustellen, wobei dann einzelne Bestandteile des Flansches aus Metall sind und andere Bestandteile aus Kunststoff. Des Weiteren ist es mit diesem Mehrkomponenten-Spritzgussverfahren auch möglich, den Dichtungsring direkt in den Flansch zu integrieren.

In bevorzugter Ausführung ist vorgesehen, dass der Tank zumindest teilweise aus Metall gefertigt ist. Das Befestigungselement wird dabei mit dem Metall des Tanks verschweißt. Dabei handelt es sich insbesondere um ein Befestigungselement aus Metall.

Alternativ dazu ist vorgesehen, dass der Tank zumindest teilweise aus Kunststoff gefertigt ist. Das Befestigungselement wird dabei vom Kunststoff des Tanks umspritzt. Dabei kann das Befestigungselement selbst aus Kunststoff oder aus Metall gefertigt sein.

In einer dritten Alternative ist bevorzugt vorgesehen, dass das Befestigungselement im Tank selbst ausgeformt ist. Dadurch ist das Befestigungselement integraler Bestandteil des Tanks. So kann sowohl bei einem Tank aus Metall als auch bei einem Tank aus Kunststoff das Befestigungselement integraler Bestandteil des Tanks sein.

Vorteilhafterweise ist vorgesehen, dass die Verbindung zwischen Befestigungselement und Verschlussbereich als Bajonettverschluss ausgebildet ist. Für den Bajonettverschluss umfasst beispielweise das Befestigungselement mehrere Krallen. Im Verschlussbereich des Flansches sind entsprechende Aussparungen vorgesehen. Bei der Montage greifen die Krallen in die Aussparungen. Durch ein leichtes Verdrehen des Flansches wird der Bajonettverschluss geschlossen.

Der Flansch weist vorteilhafterweise einen Boden auf. Dieser Boden ist von einem Kragen umgeben. An dem Kragen ist der Verschlussbereich ausgebildet. Im Boden befinden sich die Anschlussöffnungen. Vorteilhafterweise ist der Boden dabei gegenüber dem Kragen etwas in Richtung des Tankinneren versetzt. Dadurch können die Anschlussöffnungen relativ platzsparend angeordnet werden. Insbesondere ragen die Anschlussöffnungen nicht bzw. nur zum geringen Teil über den Kragen. Bevorzugt ragen weniger als 30%, ferner bevorzugt weniger als 20%, und besonders bevorzugt weniger als 10% einer Anschlussöffnung (bzw. deren Länge gemessen vom Boden) über den Kragen. An der Unterseite des Bodens können weitere Elemente der Tankanordnung, wie beispielsweise Filter oder Pumpen befestigt sein.

Vorteilhafterweise ist das Befestigungselement ein ringförmiges, die Öffnung umgebendes Element. Dementsprechend wird auch der Verschlussbereich ringförmig ausgestaltet. Die Ringform bietet sich insbesondere an, wenn der Flansch durch eine rotatorische Bewegung, z. B. beim Bajonettverschluss, aufgesetzt wird. Wenn der Flansch allerdings durch eine translatorische Bewegung aufgesetzt und verschlossen wird, können auch nicht-runde Formen für das Befestigungselement und/oder den Verschlussbereich gewählt werden.

Die zumindest eine Anschlussöffnung im Flansch ist vorteilhafterweise als Zulauf oder Ablauf des im Tank zu speichernden Mediums ausgebildet. Des Weiteren kann die Anschlussöffnung als Durchführung oder Stecker für eine strom- oder datenführende Kabelverbindung in den Tank ausgebildet sein. Des Weiteren kann solch eine Anschlussöffnung als Entlüftungsöffnung dienen.

Der Flansch kann bevorzugt Versteifungsrippen, insbesondere am Kragen, am Boden und/oder im Verschlussbereich, aufweisen, um so die Steifigkeit des Flansches zu steigern. Der Verschlussbereich kann einen oberen Abschnitt und einen unteren Abschnitt aufweisen. Der obere Abschnitt weist zweckmäßig eine höhere Härte auf als der untere Abschnitt.

Bevorzugt weist die Oberfläche, die in der Einbaulage dem freien Ende der Klaue zugewandt ist, eine Shore-Härte von mind. D87, ferner bevorzugt von mind. D91, und besonders bevorzugt von mind. D95 auf, gemessen nach der Methode DIN ISO 7619-1: 2012-02. Bevorzugt ist die Härte des oberen Abschnitt mindestens um den Faktor 1,05, ferner bevorzugt mindestens um den Faktor 1,1, und besonders bevorzugt mindestens um den den Faktor 1,15 höher als die Härte des unteren Abschnitts.

Die Härte ist dabei allgemein der mechanische Widerstand, den ein Werkstoff der mechanischen Eindringung eines anderen Körpers entgegensetzt. Die Härte ist insbesondere ein Maß für das Verschleißverhalten von Materialien. Hier konkret wäre es der Verschleiß, der durch die Reibung zwischen Klauen und Befestigungserhebungen verursacht wird.

Der obere Abschnitt kann oberhalb vom unteren Abschnitt 101 angeordnet sein. Der obere Abschnitt deckt in der Konstruktionslage bzw. Einbaulage zumindest bereichsweise den unteren Abschnitt ab. Wiederum anders ausgedrückt ist die untere Lage im verbauten Zustand näher am Tank angeordnet als der obere Abschnitt. Der obere Abschnitt ist wiederum näher am freien Ende der Klauen angeordnet als der untere Abschnitt. Der obere Abschnitt umfasst zweckmäßig zumindest die mindestens eine Befestigungserhebung, bevorzugt die komplette Ringoberseite.

Der obere Abschnitt und der untere Abschnitt weisen bevorzugt Materialien unterschiedlicher Härte auf. Der obere Abschnitt kann zumindest bereichsweise aus einem faserverstärkten Kunststoff und/oder aus einem Metallmaterial gebildet sein. Ferner kann der untere Abschnitt aus einem Kunststoffmaterial gebildet sein, bevorzugt ein Kunststoffmaterial, dass keine Verstärkungsfasern enthält (zB. POM). Ein solcher Aufbau weist besonders günstige Materialkosten auf und ist dennoch verschleißarm.

Der Verschlussbereich kann insbesondere einen oberen Abschnitt und einen unteren Abschnitt aufweisen, die zwei aneinandergefügte Teile umfasst. Das Aneinanderfügen kann beispielsweise durch Kleben und/oder Umspritzen erfolgen. Z.B. kann der Verschlussbereich im Mehrkomponenten-Spritzgießen bzw. Mehrrohstoff-Spritzgießen bzw. Umspritzen eines Metallteiles (oberer Abschnitt) hergestellt werden. Diese Herstellungsverfahren sind besonders günstig und großserientauglich. Ferner sind andere Befestigungsverfahren zur integralen Ausbildung der beiden Teile vorstellbar. Neben der integralen Ausbildung aus zwei Teilen ist auch vorstellbar, dass eine Oberflächenbeschichtung aufgebracht wird, die den zweiten Abschnitt ausbildet. Alternativ könnte eine Oberflächenbehandlung dazu führen, dass die Härte in oberflächennahen Schichten des Materials des Verschlussbereiches gesteigert wird, wodurch sich in dieser oberflächennahen Schicht die obere Schicht ausbildet.

Weitere Einzelheiten, Merkmale und Vorteile der Erfindung ergeben sich aus der nachfolgenden Beschreibung und den schematischen Figuren. Es zeigen:
- Figur 1: eine isometrische Explosionsdarstellung einer erfindungsgemäßen Tankanordnung gemäß einem Ausführungsbeispiel,
- Figur 2: eine Schnittansicht der Explosionsdarstellung nach Figur 1,
- Figur 3: den zusammengebauten Zustand der erfindungsgemäßen Tankanordnung gemäß dem Ausführungsbeispiel,
- Figur 4: eine Anordnung nach dem Stand der Technik, und
- Fig. 5 bis 7: weitere perspektivische Darstellungen der hier offenbarten Technologie,
- Fig. 8: eine Draufsicht auf eine Tankanordnung,
- Fig. 9: eine vergrößerte Detailansicht entlang der Linie A-A der Fig. 8.

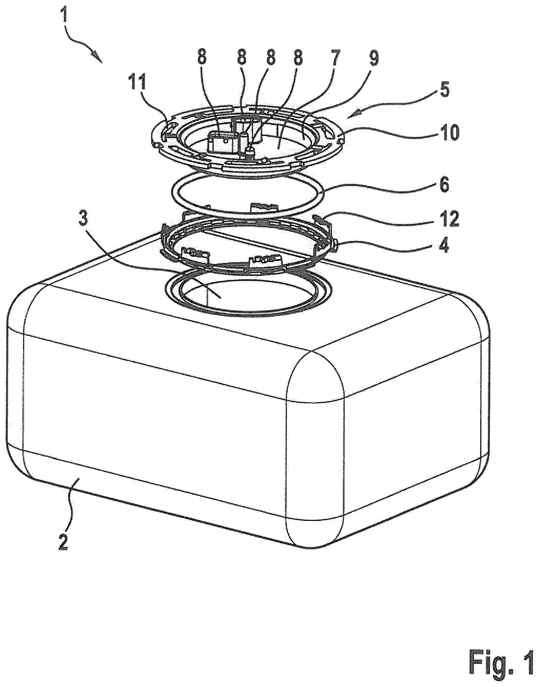

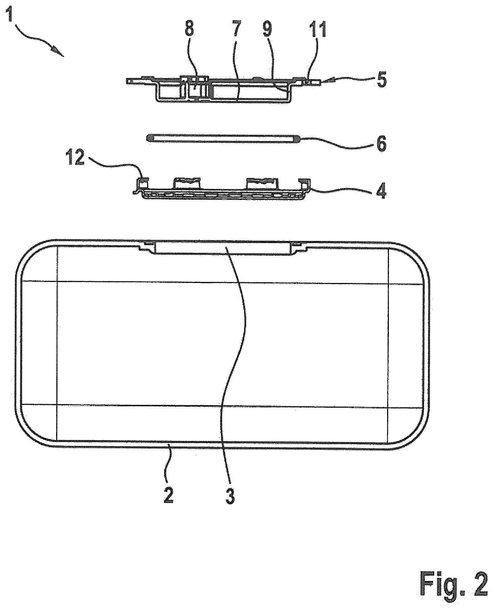

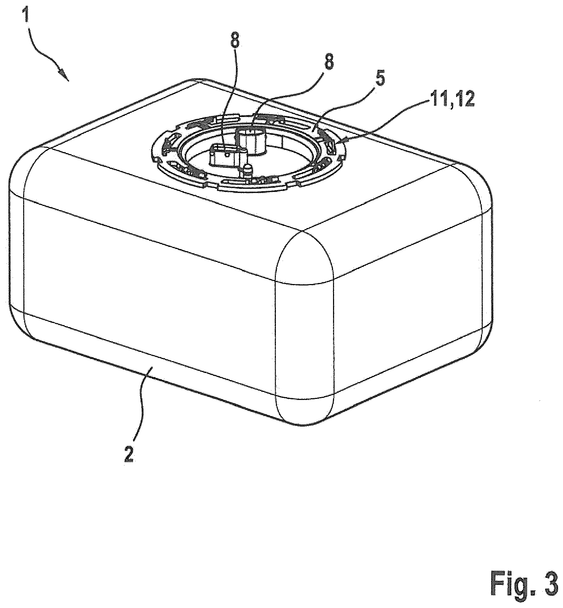

Im Folgenden wird anhand der Figuren 1 bis 3 eine Tankanordnung 1 gemäß einem Ausführungsbeispiel der Erfindung beschrieben. Figuren 1 und 2 zeigen Explosionsdarstellungen der Tankanordnung 1. Figur 3 zeigt den fertig zusammengebauten Zustand der Tankanordnung 1.

Gemäß den Figuren 1 bis 3 umfasst die Tankanordnung 1 einen Tank 2. Der Tank 2 dient beispielsweise zur Aufnahme von Kraftstoff in einem Kraftfahrzeug. In dem Tank 2 ist eine Öffnung 3 ausgebildet. An der Öffnung 3 ist ein ringförmiges Befestigungselement 4 in den Tank 2 fest eingesetzt. Beispielsweise ist das Befestigungselement 4 vom Kunststoff des Tanks 2 umspritzt oder mit dem Tank 2 verschweißt. Alternativ dazu ist es auch möglich, die wesentlichen Elemente, insbesondere die Krallen 12 des Befestigungselementes 4, als integrale Bestandteile des Tanks 2 zu bilden.

Auf das Befestigungselement 4 wird ein Dichtring 6 aufgesetzt. Bei einem Tank aus Kunststoff sitzt der Dichtring 6 direkt auf der Tankblase. Daraufhin wird die Öffnung 3 mit einem Flansch 5 verschlossen. Der Flansch 5 weist einen Boden 7 auf. In dem Boden 7 sind mehrere Anschlussöffnungen 8 ausgebildet.

Der Boden 7 des Flansches 5 geht über in einen Kragen 9. Am Kragen 9 ist ein Verschlussbereich 10 ausgebildet. Im Verschlussbereich 10 befinden sich mehrere Aussparungen 11.

Beim Aufsetzen des Flansches 5 auf das Befestigungselement 4 greifen die Krallen 12 in die Aussparungen 11. Durch ein leichtes Verdrehen des Flansches 5 gegenüber dem Tank 2 beziehungsweise gegenüber dem Befestigungselement 4 schließt sich der aus den Aussparungen 11 und Krallen 12 gebildete Bajonettverschluss.

In den Figuren befinden sich die Krallen 12 am Befestigungselement, also fest mit dem Tank 2 verbunden. Die Aussparungen 11 sind am Flansch 5 ausgebildet. Selbstverständlich ist es auch möglich, diesen Bajonettverschluss umgekehrt auszubilden, wobei dann die Krallen 12 am Flansch 5 sind und die Aussparungen 11 im Tank 2 beziehungsweise im Befestigungselement 4 ausgebildet werden.

Alternativ zum Bajonettverschluss kann auch eine Schraubverbindung gewählt werden. Allerdings ist bei der Schraubverbindung nachteilig, dass die Axialpressung zwischen Flansch 5 und Befestigungselement 4 nicht definiert vorgegeben ist.

Der Flansch 5 wird vorteilhafterweise aus Kunststoff gefertigt. Dabei kann der Flansch 5 vollständig aus Kunststoff bestehen. Alternativ dazu kann in einem Mehrkomponenten-Spritzgussverfahren der Flansch 5 aus einer Kombination aus Metallteilen und Kunststoff gefertigt werden. Dabei ist es insbesondere auch möglich, den Dichtring 7 vom Kunststoff des Flansches 5 zumindest teilweise zu umspritzen.

Das Befestigungselement 4 kann aus Kunststoff oder Metall gefertigt werden. Des Weiteren ist es möglich, die für den Bajonettverschluss nötigen Elemente, also die Aussparungen 11 oder die Krallen 12, direkt in den Tank 2 zu integrieren, wobei dann kein separates Befestigungselement 4 mehr notwendig ist.

Im Stand der Technik war der Flansch üblicherweise aus Kunststoff gefertigt. Das separate Verschlusselement wurde aus Metall gefertigt. Die Verwendung von Kunststoff bietet sich hier an, um eine Korrosion weitestgehend zu vermeiden. Im Rahmen der Erfindung wurde erkannt, dass das Verschlusselement, hier ausgebildet als Verschlussbereich 10, ebenfalls aus Kunststoff bestehen kann, wenn Verschlussbereich 10 und Flansch 5 ein gemeinsames Bauteil sind. Die Ausbildung als gemeinsames Bauteil ermöglicht eine ausreichende Stabilität, sodass dieses Bauteil, nämlich der Flansch 5 mit Verschlussbereich 10, aus Kunststoff gefertigt werden kann.

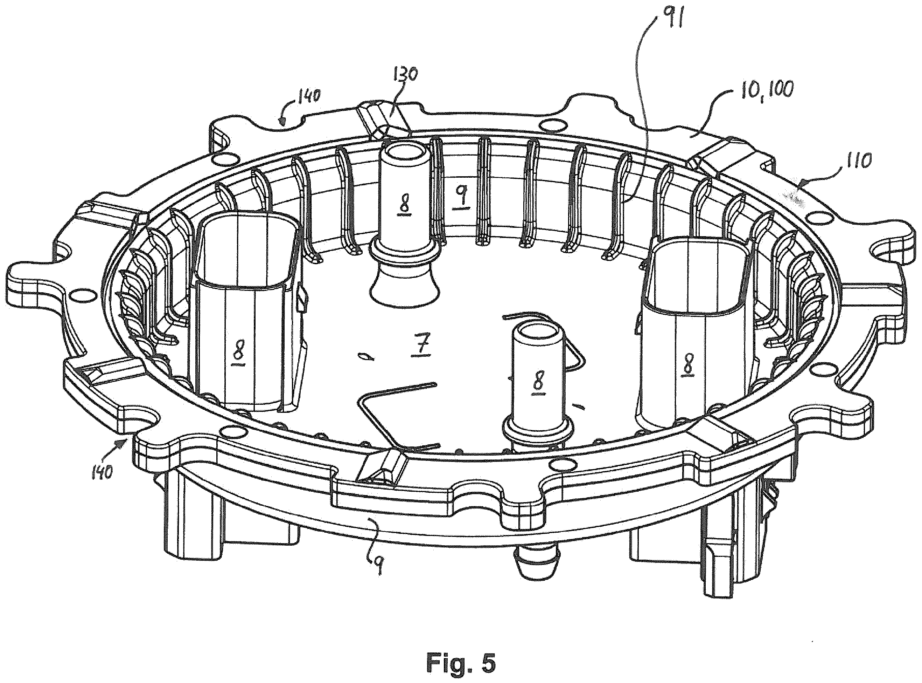

Fig. 5 zeigt die Tankanordnung mit einem Verschlussbereich 10, 100, der einen oberen Abschnitt 101 und einen unteren Abschnitt 102 umfasst. Der obere Abschnitt 101 und der untere Abschnitt 102 sind hier aus zwei Teilen ausgebildet, die integral geformt wurden. Die Versteifungsrippen 91 erstrecken sich hier vom Boden 7 bis zum oberen Rand des Kragens 9, also bis zu dem Bereich, in dem der Verschlussbereich 10, 100 beginnt.

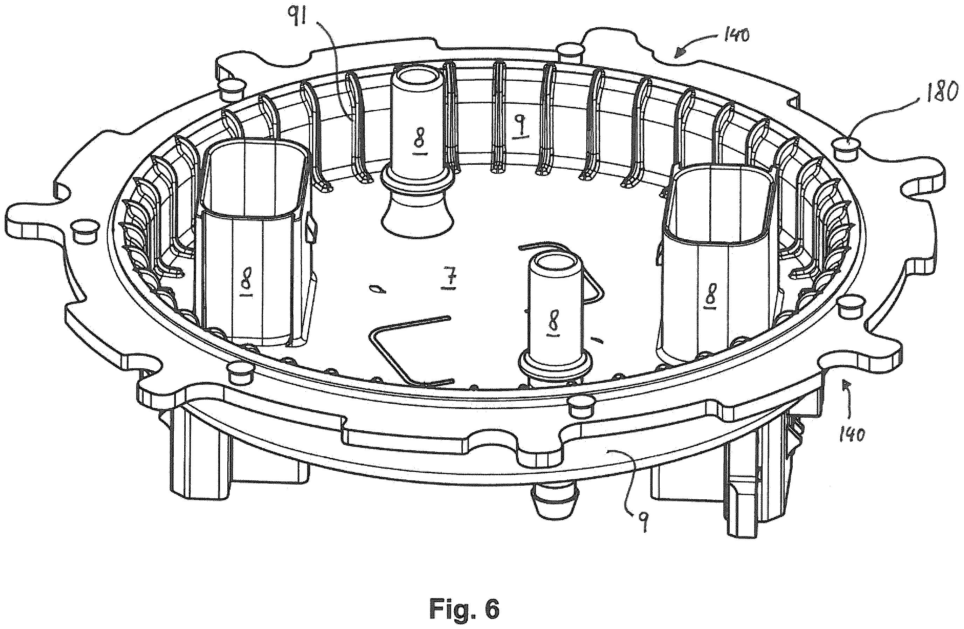

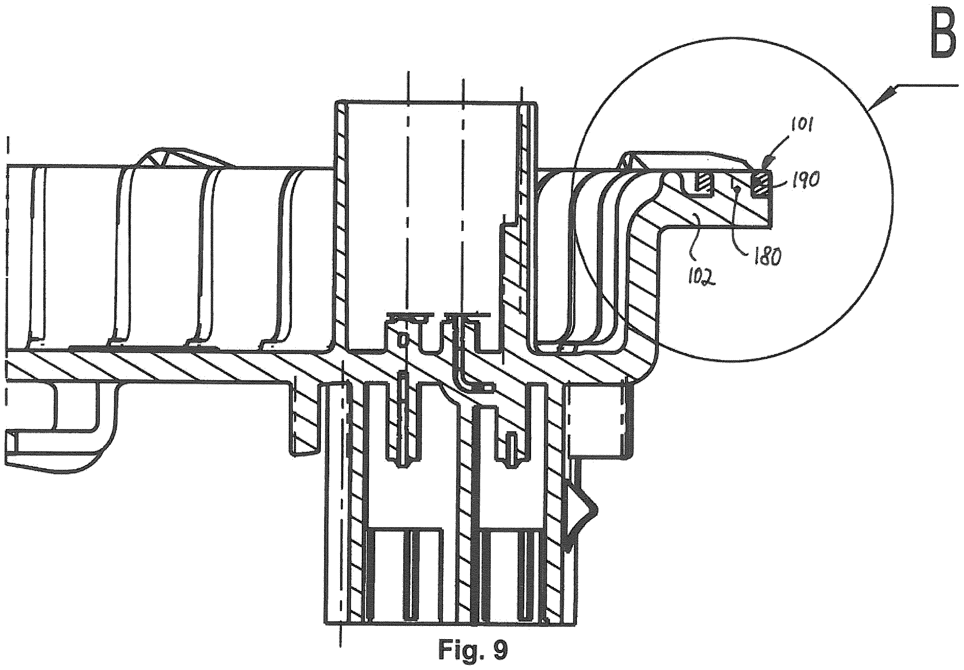

Fig. 6 zeigt den Verschlussbereich 10, 100 der Tankanordnung ohne den oberen Abschnitt 101. Von der im montierten Zustand dem oberen Abschnitt 101 zugewandten und bevorzugt ringförmig und eben ausgestalteten Oberfläche erstrecken sich hier pilzförmige Haltevorsprünge 180, die den oberen Abschnitt 101 insbesondere formschlüssig halten (vgl. Detail B in Fig. 9).

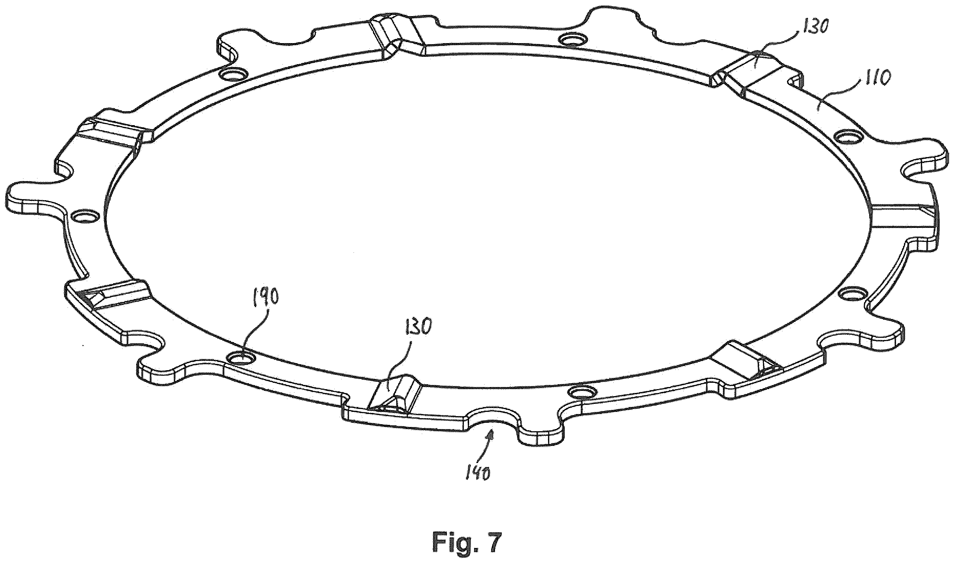

Fig. 7 zeigt den oberen Abschnitt 101 alleine. Die Aussparungen 190 sind derart ausgebildet und angeordnet, dass sie mit den Haltevorsprüngen 180 des unteren Abschnittes 102 eine formschlüssige Verbindung eingehen können. Neben dem Formschluss können bevorzugt weitere Verbindungsmechanismen zu tragen kommen.

Der abgesenkte Boden 7 des Flansches 5 ist bevorzugt ausgebildet, den Flansch 5 in der Öffnung 3 zu zentrieren. Hierzu kann der Übergang vom Boden 7 zu dem Kragen 9 zumindest bereichsweise gerundet sein oder eine Fase aufweisen. Alternativ oder zusätzlich kann der Kragen 9 vom Boden 7 zum oberen Rand hin zumindest bereichsweise sich aufweitend bzw. sich erweiternd ausgebildet sein.

Ein Anschlussbereich des Flansches kann bevorzugt ein spezifisches Formmerkmal haben, um den Falschverbau des Flansches 5 zu vermeiden. Hierzu kann beispielsweise ein Vorsprung des Flansches anders ausgebildet sein als die anderen Vorsprünge des Flansches 5.

Die hier offenbarte Technologie betrifft einen insbesondere integrierten Verbindungsring. Der Verbindungsring dient zum lösbaren Befestigen einer Kraftstofffördereinheit bzw. eines Flansches an einer Öffnung bzw. Kraftfahrzeugtanköffnung eines Kraftfahrzeugtanks, beispielsweise eines Kunststoffkraftstofftanks oder eines Stahlkraftstofftanks.

Der Verschlussbereich (nachstehend: "Verbindungsring") weist eine Verschlussbereichsoberseite (nachstehend: "Ringoberseite") und eine Verschlussbereichsunterseite (nachstehend: "Ringunterseite") auf. Die Ringunterseite ist im montierten Zustand der Kraftfahrzeugtanköffnung zugewandt. Die Ringoberseite ist im montierten Zustand dann der Kraftfahrzeugtanköffnung abgewandt.

Der Verbindungsring weist mindestens eine Befestigungserhebung auf, die von der Ringoberseite hervorsteht. Insbesondere steht die Befestigungserhebung derart hervor, dass durch Verdrehen des Verbindungsringes relativ zur Kraftfahrzeugtanköffnung die Kraftstofffördereinheit an den Kraftfahrzeugtank befestigbar ist. Hierbei kommt der aus dem Stand der Technik bekannte Bajonettmechanismus zum Einsatz, der nachstehend noch weiter erläutert wird.

Der Verbindungsring umfasst mindestens einen Werkzeugangriffsbereich, der derart ausgebildet ist, dass ein Werkzeug im Werkzeugangriffsbereich den Verbindungsring derart kontaktieren kann, dass ein Drehmoment vom Werkzeug auf den Verbindungsring übertragen werden kann, wobei zumindest ein Teilbereich des Werkzeugangriffsbereichs und ein Teilbereich der Befestigungserhebung vom Mittelpunkt M des Verbindungsringes in radialer Richtung R gleich weit vom Mittelpunkt M des Verbindungsrings beabstandet sind. Mit anderen Worten sind der Werkzeugangriffsbereich und die Befestigungserhebung in Umfangsrichtung U eines gedachten Teilkreises T gesehen hintereinander und überlappend angeordnet. Wiederum anders ausgedrückt umfasst der Verbindungsring zumindest einen Teilkreis T um den Mittelpunkt M, der gleicheizeitig durch den Werkzeugangriffsbereich und durch die Befestigungserhebung geht.

Durch diese vorteilhafte Ausgestaltung des Verbindungsrings ist es möglich, auf die bisherigen äußeren Aussparungen zu verzichten, die vergleichsweise weit außen am äußeren Ring vorgesehen waren. Der Verbindungsring kann insgesamt kleiner und leichter ausgebildet werden. Ferner wird für die Montage weniger Bauraum benötigt.

Der Werkzeugangriffsbereich kann als Aussparung ausgebildet sein. Bevorzugt sind in Umfangsrichtung U über den Umfang verteilt zwischen den Befestigungserhebungen die Aussparungen angeordnet. Die Aussparungen können Aussparungsränder aufweisen, die von der Ringoberseite in axialer Richtung Z abstehen, insbesondere derart, dass die Ränder von einem Werkzeug hintergreifbar sind, beispielsweise auch, wenn der Verbindungsring auf einer Kraftfahrzeugtanköffnung eines Kraftstofftanks aufliegt. Anstatt Aussparungen wären auch andere geeignete Formschlussmittel vorstellbar, beispielweise auf der Ringoberseite vorgesehene Vorsprünge, Kanten, etc.

Der Verbindungsring kann mindestens eine Führung umfassen, die zumindest bereichsweise am äußeren Rand des Verbindungsrings vorgesehen ist. Die Führung ist geeignet, einen vorderen Rand einer Klaue eines Kraftstoffbehälters positionierend zu führen. Der äußere Rand kann an bzw. im Übergangsbereich zu einer Ringunterseite eine Fase oder eine Rundung zur Positionierung aufweisen. Bevorzugt ist der Verbindungsring aus Blech hergestellt. Ferner kann der Verbindungsring auch aus einem anderen Material, beispielsweise einem Kunststoffmaterial, hergestellt sein. Die Führung kann ferner einen von der Ringoberseite abstehenden Bereich aufweisen. Der abstehende Bereich kann beispielsweise ein umgebogenes Blechteil sein.

Gemäß der hier offenbarten Technologie wird die Positionierung/Führung des Verbindungsrings relativ zu den Klauen durch ein Führungselement am Verbindungsring realisiert. Dies verringert vorteilhaft Gewicht, Bauraum, Material- und Fertigungskosten. Die kleineren Verbindungsringe lassen sich zudem leichter montieren.

Zumindest ein Teilbereich der Führung und ein Teilbereich des Werkzeugangriffsbereichs und/oder der Befestigungserhebung können vom Mittelpunkt M des Verbindungsringes in radialer Richtung R gleich weit vom Mittelpunkt M beabstandet sein. Mit anderen Worten kann auch die Führung in Umfangsrichtung U gesehen überlappend angeordnet sein und einen gemeinsamen Teilkreis T mit dem Werkzeugangriffsbereich und/oder der Befestigungserhebung aufweisen. Eine solche Ausgestaltung ist besonders kompakt.

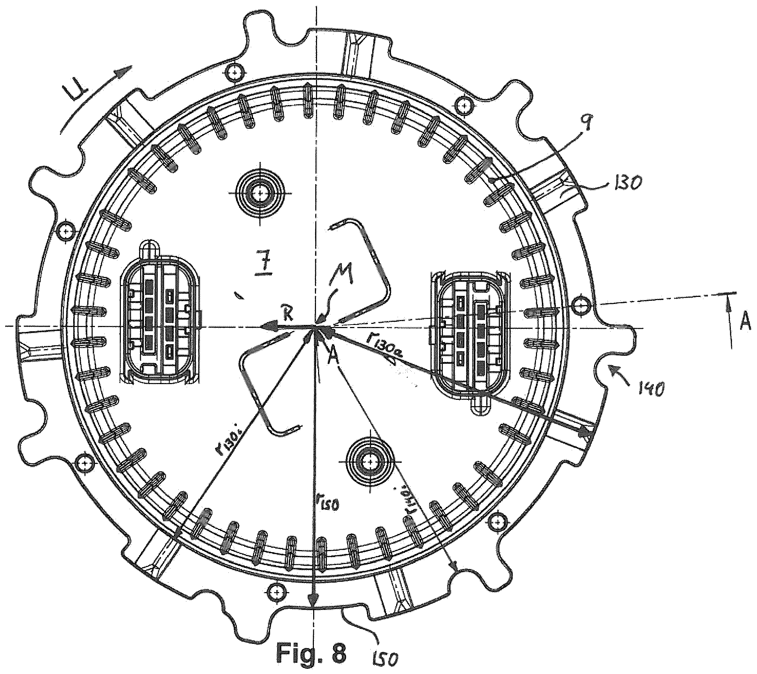

Die Fig. 5 und 7 bis 9 zeigen einen Verbindungsring 100 gemäß der hier offenbarten Technologie. Die Ringoberseite 110 bildet eine Ebene, von der aus sich die Befestigungserhebungen 130, die Werkzeugangriffsbereiche 140 und die abstehenden Bereiche der Führungen 150 erheben. Sie stehen also von der dem Kraftstofftank abgewandten Oberseite des Verbindungsrings ab.

Die Befestigungserhebungen 130 sind genauso geformt und angeordnet wie die vorbekannten Erhebungen. Auch der Innenranddurchmesser des Verbindungsrings 100 entspricht bevorzugt dem der vorbekannten Lösung. Somit kann der hier offenbarte Verbindungsring 100 auch in älteren Kraftfahrzeugen verbaut werden. Die Befestigungserhebungen 130 erstrecken sich vom Innenrand des Verbindungsringes 100 in radialer Richtung R zu einem Außenrand. Der kleinste Abstand r₁₃₀ᵢ der Befestigungserhebung 130 ist hier etwas kleiner als der kleinste Abstand r₁₄₀ᵢ des Werkzeugangriffsbereichs 140. Der größte Abstand r₁₃₀ₐ der Befestigungserhebung 130 indes ist größer als der kleinste Abstand r₁₄₀ᵢ des Werkzeugangriffsbereichs 140. Der größte Abstand r₁₄₀ₐ des Werkzeugangriffsbereichs 140 ist hier größer als der größte Abstand r₁₃₀ₐ der Befestigungserhebung 130. Der Abstand r₁₅₀ der Führung 150 liegt hier zwischen den kleinsten und größten Abständen der Befestigungserhebung 130 und des Werkzeugangriffsbereichs 140.

Der Werkzeugangriffsbereich 140 ist hier als eine Aussparung 140 ausgeführt. Die Aussparung ist derart angehoben, dass die Aussparung 140 von einem Werkzeug hintergriffen werden kann.

Der Verbindungsring 100 kann ferner einen in radialer Richtung abstehenden Verdrehanschlag aufweisen, der bevorzugt einstückig mit der Aussparung 140 ausgebildet ist.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung zu verlassen.

Sofern die Beschreibung die einzelnen Elemente in der Einzahl beschreibt ist gleichzeitig auch die Mehrzahl mit umfasst. So umfasst die Beschreibung einer Befestigungserhebung, eines Werkzeugangriffsbereich und/oder einer Führung gleichzeitig die Ausgestaltung mit mehreren Befestigungserhebungen, Werkzeugangriffsbereichen und/oder Führungen. Hier dargestellt sind sieben Befestigungserhebungen, sieben Werkzeugangriffsbereiche und sieben Führungen. Selbstverständlich können auch weniger oder mehrere dieser Elemente vorgesehen sein.

### Bezugszeichenliste:

- 1: Tankanordnung
- 2: Tank
- 3: Öffnung
- 4: Befestigungselement
- 5: Flansch
- 6: Dichtring
- 7: Boden
- 8: Anschlussöffnung
- 9: Kragen
- 10: Verschlussbereich
- 11: Aussparung
- 12: Krallen
- 104: Befestigungselement nach dem Stand der Technik
- 105: Flansch nach dem Stand der Technik
- 106: Dichtring nach dem Stand der Technik
- 107: Verschlusselement nach dem Stand der Technik
- 108: Tank nach dem Stand der Technik

## Patentansprüche

1. Tankanordnung (1), vorzugsweise für ein Kraftfahrzeug, umfassend
- einen Tank (2) mit zumindest einer Öffnung (3),
- ein fest mit dem Tank (2) verbundenes oder im Tank integriertes Befestigungselement (4) an der Öffnung (3), und
- einen in die Öffnung (3) eingesetzten, die Öffnung (3) verschließenden Flansch (5),
wobei im Flansch (5) zumindest eine Anschlussöffnung (8) zum Anschließen des Tanks (2) ausgebildet ist oder der Flansch (5) die Öffnung (3) als Blindflansch vollständig verschließt; wobei der Flansch (5) einen Verschlussbereich (10, 100) umfasst, der beim Einsetzen des Flansches (5) in die Öffnung (3) kraft- und/oder formschlüssig mit dem Befestigungselement (4) verbindbar ist;
wobei der Flansch (5) einen Boden (7) und einen den Boden (7) umgebenden Kragen (9) umfasst und am Kragen (9) der Verschlussbereich (10, 100) ausgebildet ist;
wobei die Verbindung zwischen Befestigungselement (4) und Verschlussbereich (10, 100) als Bajonettverschluss ausgebildet ist;
**dadurch gekennzeichnet, dass**
der Flansch (5) Versteifungsrippen (91) am Kragen (9), am Boden (7) und/oder im Verschlussbereich (10, 100) aufweist.

2. Tankanordnung nach Anspruch 1, wobei der Verschlussbereich (10, 100) als Verbindungsring (100) ausgebildet ist, wobei der Verbindungsring (100) umfasst:
- eine Ringoberseite (110)
- mindestens eine Befestigungserhebung (130), die von der Ringoberseite (110) hervorsteht; und
- mindestens einen Werkzeugangriffsbereich (140), der derart ausgebildet ist, dass ein Drehmoment von einem Werkzeug auf den Verbindungsring (100) übertragen werden kann; wobei zumindest ein Teilbereich des Werkzeugangriffsbereichs (140) und ein Teilbereich der Befestigungserhebung (130) vom Mittelpunkt M des Verbindungsringes (100) in radialer Richtung (R) gleich weit vom Mittelpunkt M beabstandet sind.

3. Tankanordnung nach Anspruch 2, wobei der Werkzeugangriffsbereich (140) eine Aussparung (140) ist.

4. Tankanordnung nach Anspruch 2 oder 3, wobei die Aussparung (140) Aussparungsränder (144) aufweist, die von einem Werkzeug hintergreifbar sind.

5. Tankanordnung nach einem der vorherigen Ansprüche 2 bis 4, wobei der Verbindungsring (100) mindestens eine Führung (150) umfasst, die zumindest bereichsweise am äußeren Rand (150) des Verbindungsrings (100) vorgesehen ist.

6. Tankanordnung nach Anspruch 5, wobei der äußere Rand (150) an einer Ringunterseite (120) eine Fase oder eine Rundung zur Positionierung aufweist.

7. Tankanordnung nach einem der vorherigen Ansprüche 2 bis 6, wobei der Verbindungsring (100) aus Blech hergestellt ist.

8. Tankanordnung nach einem der vorhergehenden Ansprüche, wobei im Boden (7) die zumindest eine Anschlussöffnung (8) ausgebildet ist,
wobei der Boden (7) gegenüber dem Kragen (9) in Richtung des Tankinneren versetzt ist.

9. Tankanordnung nach Anspruch 8, wobei zumindest eine Anschlussöffnung (8) nicht oder nur zum geringen Teil über den Kragen (9) hinaus ragt.

10. Tankanordnung nach einem der vorhergehenden Ansprüche, wobei der Flansch in einem Mehrkomponenten-Spritzgussverfahren herzustellen, wobei dann einzelne Bestandteile des Flansches aus Metall sind und andere Bestandteile aus Kunststoff.

11. Tankanordnung nach einem der vorhergehenden Ansprüche, wobei der Tank (2) zumindest teilweise aus Metall gefertigt ist und das Befestigungselement (4) mit dem Metall des Tanks (2) verschweißt ist.

12. Tankanordnung nach einem der vorhergehenden Ansprüche, wobei der Verschlussbereich (10, 100) einen oberen Abschnitt (101) und einen unteren Abschnitt (102) aufweist, wobei der obere Abschnitt (101) eine höhere Härte aufweist als der untere Abschnitt.

13. Tankanordnung nach Anspruch 12, wobei der obere Abschnitt (101) und der untere Abschnitt (102) Materialien unterschiedlicher Härte aufweisen.

14. Tankanordnung nach einem der vorherigen Ansprüche , wobei der obere Abschnitt (101) zumindest bereichsweise aus einem faserverstärkten Kunststoff und/oder aus einem Metallmaterial gebildet ist, und wobei der untere Abschnitt (102) aus einem Kunststoffmaterial gebildet ist.

15. Tankanordnung nach einem der vorherigen Ansprüche, wobei der obere Abschnitt (101) und der untere Abschnitt (102) zwei aneinandergefügte Teile (101, 102) sind.

## Claims

1. Tank arrangement (1), preferably for a motor vehicle, comprising
- a tank (2) with at least one opening (3),
- a fastening element (4), which is fixedly joined to the tank (2) or integrated in the tank, at the opening (3), and
- a flange (5) which is inserted into the opening (3) and which closes the opening (3),
wherein at least one connection opening (8) for the connection of the tank (2) is formed in the flange (5), or the flange (5), as a blind flange, completely closes the opening (3); wherein the flange (5) comprises a closure region (10, 100) which, when the flange (5) is inserted into the opening (3), can be joined in force-fitting and/or form-fitting fashion to the fastening element (4); wherein the flange (5) comprises a base (7) and a collar (9) surrounding the base (7), and the closure region (10, 100) is formed on the collar (9);
wherein the join between fastening element (4) and closure region (10, 100) is formed as a bayonet fastener;
**characterized in that** the flange (5) has stiffening ribs (91) on the collar (9), on the base (7) and/or in the closure region (10, 100).

2. Tank arrangement according to Claim 1, wherein the closure region (10, 100) is formed as a joining ring (100), wherein the joining ring (100) comprises:
- a ring top side (110),
- at least one fastening elevation (130) which protrudes from the ring top side (110); and
- at least one tool engagement region (140) which is formed such that a torque can be transmitted from a tool to the joining ring (100); wherein at least one subregion of the tool engagement region (140) and one subregion of the fastening elevation (130) are spaced apart from the central point M of the joining ring (100) in a radial direction (R) so as to be equidistant from the central point M.

3. Tank arrangement according to Claim 2, wherein the tool engagement region (140) is a cutout (140).

4. Tank arrangement according to Claim 2 or 3, wherein the cutout (140) has cutout edges (144) which can be engaged behind by a tool.

5. Tank arrangement according to any one of the preceding Claims 2 to 4, wherein the joining ring (100) comprises at least one guide (150) which is provided at least in certain regions on the outer edge (150) of the joining ring (100).

6. Tank arrangement according to Claim 5, wherein the outer edge (150) has, on a ring bottom side (120), a bevel or a rounding for positioning purposes.

7. Tank arrangement according to any one of the preceding Claims 2 to 6, wherein the joining ring (100) is produced from sheet metal.

8. Tank arrangement according to any one of the preceding claims, wherein the at least one connection opening (8) is formed in the base (7), wherein the base (7) is offset with respect to the collar (9) in the direction of the tank interior.

9. Tank arrangement according to Claim 8, wherein at least one connection opening (8) does not project, or projects only to a small extent, beyond the collar (9) .

10. Tank arrangement according to any one of the preceding claims, wherein the flange to produce in a multi-component injection moulding process, wherein, then, individual constituent parts of the flange are composed of metal and other constituent parts are composed of plastic.

11. Tank arrangement according to any one of the preceding claims, wherein the tank (2) is manufactured at least partially from metal, and the fastening element (4) is welded to the metal of the tank (2).

12. Tank arrangement according to any one of the preceding claims, wherein the closure region (10, 100) has an upper section (101) and a lower section (102), wherein the upper section (101) has a greater hardness than the lower section.

13. Tank arrangement according to Claim 12, wherein the upper section (101) and a lower section (102) have materials of different hardness.

14. Tank arrangement according to any one of the preceding claims, wherein the upper section (101) is formed at least in certain regions from a fibre-reinforced plastic and/or from a metal material, and wherein the lower section (102) is formed from a plastics material.

15. Tank arrangement according to any one of the preceding claims, wherein the upper section (101) and the lower section (102) are two parts (101, 102) which are joined together.

## Revendications

1. Agencement de réservoir (1), de préférence pour un véhicule automobile, comportant
- un réservoir (2) doté d'au moins une ouverture (3),
- un élément de fixation (4), relié solidement au réservoir (2) ou intégré dans le réservoir, au niveau de l'ouverture (3), et
- une bride (5) insérée dans l'ouverture (3) et fermant l'ouverture (3),
au moins une ouverture de raccordement (8) servant au raccordement du réservoir (2) étant réalisée dans la bride (5) ou la bride (5) fermant complètement l'ouverture (3) en tant que bride aveugle ; la bride (5) comportant une région de fermeture (10, 100) qui peut être reliée à l'élément de fixation (4) à force et/ou par complémentarité de forme lors de l'insertion de la bride (5) dans l'ouverture (3) ; la bride (5) comportant un fond (7) et une collerette (9) entourant le fond (7) et la région de fermeture (10, 100) étant réalisée au niveau de la collerette (9) ; la liaison entre l'élément de fixation (4) et la région de fermeture (10, 100) étant réalisée sous forme de liaison à baïonnette ;
**caractérisé en ce que**
la bride (5) comprend des nervures de rigidification (91) sur la collerette (9), sur le fond (7) et/ou dans la région de fermeture (10, 100).

2. Agencement de réservoir selon la revendication 1, la région de fermeture (10, 100) étant réalisée sous forme d'anneau de liaison (100), l'anneau de liaison (100) comportant :
- un côté supérieur d'anneau (110) ;
- au moins un rehaussement de fixation (130) qui fait saillie à partir du côté supérieur d'anneau (110) ; et
- au moins une région d'entrée en prise d'outil (140) qui est réalisée de telle sorte qu'un couple peut être transmis par un outil à l'anneau de liaison (100) ; au moins une région partielle de la région d'entrée en prise d'outil (140) et une région partielle du rehaussement de fixation (130) étant espacées du centre M de l'anneau de liaison (100) de manière équidistante du centre M dans la direction radiale (R).

3. Agencement de réservoir selon la revendication 2, la région d'entrée en prise d'outil (140) étant un évidement (140).

4. Agencement de réservoir selon la revendication 2 ou 3, l'évidement (140) comprenant des bords d'évidement (144) avec lesquels un outil peut venir en prise par l'arrière.

5. Agencement de réservoir selon l'une des revendications précédentes 2 à 4, l'anneau de liaison (100) comportant au moins un guide (150) qui est prévu au moins dans certaines régions au niveau du bord extérieur (150) de l'anneau de liaison (100).

6. Agencement de réservoir selon la revendication 5, le bord extérieur (150) comprenant, au niveau d'un côté inférieur d'anneau (120), un chanfrein ou un arrondi pour le positionnement.

7. Agencement de réservoir selon l'une des revendications précédentes 2 à 6, l'anneau de liaison (100) étant fabriqué à partir de tôle.

8. Agencement de réservoir selon l'une des revendications précédentes, l'au moins une ouverture de raccordement (8) étant réalisée dans le fond (7), le fond (7) étant décalé par rapport à la collerette (9) en direction de l'intérieur du réservoir.

9. Agencement de réservoir selon la revendication 8, au moins une ouverture de raccordement (8) ne dépassant pas, ou ne dépassant que dans une faible mesure, au-delà de la collerette (9).

10. Agencement de réservoir selon l'une des revendications précédentes, la bride fabriquer suivant un procédé de moulage par injection à plusieurs composants, des parties constitutives individuelles de la bride étant alors en métal et d'autres parties constitutives étant en matière synthétique.

11. Agencement de réservoir selon l'une des revendications précédentes, le réservoir (2) étant fabriqué au moins partiellement à partir de métal et l'élément de fixation (4) étant soudé sur le métal du réservoir (2).

12. Agencement de réservoir selon l'une des revendications précédentes, la région de fermeture (10, 100) comprenant une section supérieure (101) et une section inférieure (102), la section supérieure (101) présentant une dureté plus élevée que la section inférieure.

13. Agencement de réservoir selon la revendication 12, la section supérieure (101) et la section inférieure (102) comprenant des matériaux de duretés différentes.

14. Agencement de réservoir selon l'une des revendications précédentes, la section supérieure (101) étant formée au moins dans certaines régions à partir d'une matière synthétique renforcée par des fibres et/ou à partir d'un matériau métallique, et la section inférieure (102) étant formée à partir d'un matériau synthétique.

15. Agencement de réservoir selon l'une des revendications précédentes, la section supérieure (101) et la section inférieure (102) étant deux parties (101, 102) assemblées l'une à l'autre.
